# EUROPEAN PATENT SPECIFICATION

(11) **EP 3 248 118 B1**
(45) Date of publication and mention of the grant of the patent: **29.07.2026**
(21) Application number: 16804983.1
(22) Date of filing: 18.11.2016
(51) Int. Cl.: G06F 16/27

(54) **SYSTEM FOR MULTI-MASTER SYNCHRONOUS REPLICATION OPTIMIZATION**
SYSTEM FÜR SYNCHRONE MULTIMASTER-REPLIKATIONSOPTIMIERUNG
SYSTÈME D'OPTIMISATION DE RÉPLICATION SYNCHRONE MULTI-MAÎTRES

(30) Priority: 06.04.2016 IN 201641012171
(43) Date of publication of application: 29.11.2017
(73) Proprietor: HUAWEI TECHNOLOGIES CO., LTD., Shenzhen, Guangdong 518129 (CN)
(72) Inventor: SREEKANTAIAH, Nirmala, Shenzhen, Guangdong 518129 (CN); RAMAMURTHI, Prasanna Venkatesh, Shenzhen, Guangdong 518129 (CN); KUMAR, Dilip, Shenzhen, Guangdong 518129 (CN)
(74) Representative: Goddar, Heinz J.
(86) International application number: PCT/CN2016/106420
(87) International publication number: WO 2017/173828

(56) References cited:
- CN-A- 101 390 094
- CN-A- 102 193 989
- US-A1- 2003 182 319
- US-A1- 2007 067 302
- US-A1- 2008 098 042
- US-A1- 2011 173 619
- US-B1- 9 026 493
- NEIL CONWAY: "A Proposal for a Multi-Master Synchronous Replication System", 12 January 2006 (2006-01-12), XP055450485, Retrieved from the Internet <URL:https://web.archive.org/web/20091015022435if_/http://neilconway.org:80/docs/slony2_report.pdf> [retrieved on 20180213]

## Description

### TECHNICAL FIELD

The present subject matter described herein, in general, relates to storage of data in databases or distributed computing systems, and more particularly, to a system and method for multi-master synchronous replication optimization.

### BACKGROUND

A database is an electronic filing system that stores data in a structured way. The primary storage structure in a database is a table. A database may contain multiple tables and each table may hold information of a specific type. Database tables store and organize data in horizontal rows and vertical columns Rows typically correspond to real-world entities or relationships that represent individual records in a table. Columns may denote specific attributes of those entities or relationships, such as "name," "address" or "phone number." For example, Company X may have a database containing a "customer" table listing the names, addresses and phone numbers of its customers. Each row may represent a single customer and the columns may represent each customer's name, address and phone number.

Database Replication is a process of ensuring a copy of data exists on a different machine to provide high availability. Database replication is generally the frequent electronic copying data from a database in one computer or server to a database in another so that all users share the same level of information.

As well known in the prior-art, the replication can either be physical (log-shipping) or logical (command-shipping). It can also be synchronous, where in the application wait time includes changes in the originator node and time to safely commit in the replica, or it can be asynchronous, where application gets response immediately after the data is safely committed in the originator node. The replicas are generally read-only. Further, master-master replication is a deployment scenario where-in both nodes can accept write queries. Also, it can be understood that, an originator node is always a single node however there can be multiple replica nodes.

Conventionally available techniques generally work by applying the changes to queries received on the originator node, sending these changes to the replica, waiting for these changes to be committed on the replica nodes, and then commit the changes in originator node. However, a conflict resolution for the transactions that are received from the replica node and the ones that are happening in the current node is the main challenge of multi-master synchronous replication. Conflict resolution is a way to handle different types of conflicts - update conflicts (two transactions update same row at same time), uniqueness constraint conflicts (two transactions try to update/insert same unique key in the table), deletion conflicts (deletion of a row by one transaction and updating/deletion of the same by another transaction). For a master-master replication, during update on the nodes (other than the originator node), locks are obtained on the record to check if there is a conflict. These locks are held until the transaction is committed or rolled-back. This kind of locking reduces the scalability and throughput of the overall system.
Document XP055450485, Neil Conway: "A Proposal for a Multi-Master Synchronous Replication System" 12 January 2006 discloses that in multi-master database replication, a cluster consists of a set of nodes connected via a network. Each node contains a copy of the entire database. The nodes in a Slony II cluster communicate primarily via a group communication system (GCS). In Slony II, if two write sets conflict, we abort the writeset that coms later in the total order defined by the GCS. US 2011/173619 A1 describes an apparatus and method for optimized application of batched data to a database, primarily focusing on improving the efficiency of data replication. It groups small transactions from a continuous stream into larger "submission groups" (batches) containing similar operations, which are then applied to the target database substantially synchronously. The system identifies dependencies between these groups to ensure referential integrity and correct sequencing, and it can utilize multi-threading and multi-row (array) operations to enhance throughput.

### SUMMARY

This summary is provided to introduce concepts related to system for multi-master synchronous replication optimization which is further described below in the detailed description.

A main objective of the present invention is to solve the technical problem as recited above by providing a system for optimizing multi-master synchronous replication.

Another objective of the present invention is to increase the scalability and throughput of the system in case of multi-master synchronous replication. The present invention considers an availability of a flow controller at the application level which will route the distinct range of queries to different masters based on the application logic.

Another objective of the present invention is to provide a system that uses optimistic concurrency based replication to achieve improved scalability and throughput of the system.

The invention is defined by system claim 1.

In contrast to the prior-art techniques, available if any, the present invention instead of using a pessimistic approach, the replicated records can be updated optimistically. In present invention no locks are obtained during actual operation. The actual conflict checking happens during the commit on the master side. So even though query succeeds in originator node, it can fail during commit.

Further, the present invention, during insert, one of the masters will be chosen as insert leader. The insert leader will allocate a range of row_id to the incoming query. If the query inserts more records than the range, it will be rolled back. During commit, the row_id range and the new records are sent to other replicas for conflict checking. The present invention is true for update query, wherein row_id can change for insert across different replicas.

The various options and preferred embodiments referred to above in relation to the first implementation are also applicable in relation to the other implementations.

### BRIEF DESCRIPTION OF THE ACCOMPANYING DRAWINGS

The detailed description is described with reference to the accompanying figures. In the figures, the left-most digit(s) of a reference number identifies the figure in which the reference number first appears. The same numbers are used throughout the drawings to refer like features and components.
Figure 1 illustrates a system for multi-master replication, in accordance with an embodiment of the present subject matter.
Figure 2 illustrates a block diagram for database replication, in accordance with an embodiment of the present subject matter.
Figure 3 illustrates a method for multi-master replication, in accordance with an embodiment of the present subject matter.

It is to be understood that the attached drawings are for purposes of illustrating the concepts of the invention and may not be to scale.

### DETAILED DESCRIPTION OF THE PRESENT INVENTION

As used herein, the singular forms "a", "an", and "the" are intended to include the plural forms as well, unless the context clearly indicates otherwise. Furthermore, the use of the terms "a", "an", etc., do not denote a limitation of quantity, but rather denote the presence of at least one of the referenced items. It will be further understood that the terms "comprises" and/or "comprising", or "includes" and/or "including", when used in this specification, specify the presence of stated features, regions, integers, steps, operations, elements, and/or components, but do not preclude the presence or addition of one or more other features, regions, integers, steps, operations, elements, components, and/or groups thereof.

In the following description, for the purpose of explanation, numerous specific details are set forth in order to provide a thorough understanding of the present invention. It will be apparent, however, that the present invention may be practiced without these specific details. In other instances, well-known structures and devices are shown in block diagram form in order to avoid unnecessarily obscuring the present invention.

While aspects are described for system and method for multi-master synchronous replication optimization, the present invention may be implemented in any number of different computing systems, environments, and/or configurations, the embodiments are described in the context of the following exemplary systems, apparatus, and methods.

In one implementation, the present invention instead of using a pessimistic approach, the replicated records can be updated optimistically. The present invention does not use any locks i.e., locks are not obtained, during actual operation. Actual conflict checking happens during the commit on the replica side. So even though query succeeds in the originator node, it may fail during commit.

The present invention is also applicable for update query, whereas row_id may change for insert across different masters. During insert, one of the masters may be chosen as an insert leader. The insert leader may allocate a range of row_ids to the incoming query. If the query inserts more records than the range, it will be rolled back. During commit, the row id range and the new records are sent to other replica for conflict checking.

In one implementation, as compared to the existing replication operations, in the present invention, when a log is sent for the replication, it contains row_id of the record with the updated data. The row_id may be treated as a physical offset of the record from the **0**th record of the table. Whenever the logs for a row_id are received, that row_id is marked as dirty, and update for the record corresponding to the row id is started. This update can be atomic operation and does not need any locks.

In one implementation, as compared to the existing operations during update on the node, in the present invention, during an update operation on the node, row_id of the specific record is marked as dirty. This may be an atomic operation. If the row_id is marked dirty already due to the replica update, the current update operation may fail at this stage. If the update of the record, in the current node succeeds, conflict resolution is moved to the commit time,

In one implementation, as compared to the existing operations during commit, in the present invention, during commit of each transaction, a message is sent to all the replicas. Each of the replica checks for the conflict based row_id of the log sent by replica, and row_id of its current transactions in progress. If there is a conflict, they return an error to the originator node, and the transaction fails. If there is no conflict, both originator and the replica nodes apply the records in parallel. User may have to wait only till the record is applied in originator node as there may be no more conflicts in the replicas.

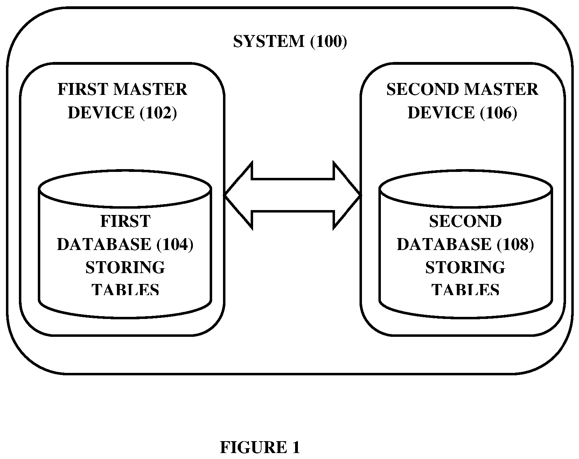

Referring now to figure **1** a system for multi-master replication is illustrated, in accordance with an embodiment of the present subject matter. In one implantation, the system **100** comprises plurality of master devices storing replicated data and communicably coupled with each other. Referring now to figure **1****,** a system **100** for multi-master replication is disclosed, the system **100** comprises at least one first master device **102** and a first database **104** at a first replication site; and at least one second master device **106** and a second database **108** at a second replication site. Although the present subject matter is explained considering that the present invention is implemented in the first master device **102** and/or the second master device **106,** it may be understood that the first master device **102** and/or the second master device **106** may also be implemented in a variety of computing systems, such as a laptop computer, a desktop computer, a notebook, a workstation, a mainframe computer, a server, a network server, and the like. It will be understood that the first master device **102** and/or the second master device **106** may be accessed by multiple users, or applications residing on the first master device **102** and/or the second master device **106.** Examples of the first master device **102** and/or the second master device **106** may include, but are not limited to, a portable computer (computer system), a personal digital assistant, a handheld device, sensors, routers, gateways and a workstation. The first master device **102** and/or the second master device **106** is communicatively coupled to each other or other devices or nodes or apparatuses to form a network (not shown).

In one implementation, the network (not shown) may be a wireless network, a wired network or a combination thereof. The network can be implemented as one of the different types of networks, such as GSM, CDMA, LTE, UMTS, intranet, local area network (LAN), wide area network (WAN), the internet, and the like. The network may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network may include a variety of network devices, including routers, bridges, servers, computing devices, storage devices, and the like.

The first master device **102** and/or the second master device **106** as illustrated in accordance with an embodiment of the present subject matter may include a processor (not shown), an interface (not shown), and a memory (not shown). The processor may be implemented as one or more microprocessors, microcomputers, microcontrollers, digital signal processors, central processing units, state machines, logic circuitries. and/or any devices that manipulate signals based on operational instructions. Among other capabilities, the at least one processor is configured to fetch and execute computer-readable instructions or modules stored in the memory.

The interface (I/O interface) may include a variety of software and hardware interfaces, for example, a web interface, a graphical user interface, and the like. The I/O interface may allow the first master device **102** and/or the second master device **106** to interact with a user directly. Further, the I/O interface may enable the first master device **102** and/or the second master device **106** to communicate with other devices or nodes, computing devices, such as web servers and external data servers (not shown). The I/O interface can facilitate multiple communications within a wide variety of networks and protocol types, including wired networks, for example, GSM, CDMA, LAN, cable, etc., and wireless networks, such as WLAN, cellular, or satellite. The I/O interface may include one or more ports for connecting a number of devices to one another or to another server. The I/O interface may provide interaction between the user and the first master device **102** and/or the second master device **106** via, a screen provided for the interface.

The memory may include any computer-readable medium known in the art including, for example, volatile memory, such as static random access memory (SRAM) and dynamic random access memory (DRAM), and/or nonvolatile random access memory (NVRAM), such as read only memory (ROM), erasable programmable ROM, flash memories, hard disks, optical disks, and magnetic tapes. The memory may include plurality of instructions or modules or applications to perform various functionalities. The memory includes routines, programs, objects, components, data structures, etc., which perform particular tasks or implement particular abstract data types.

In one implementation, a system **100** for multi-master replication is disclosed. The system **100** comprises at least one first master device **102** and a first database **104** at a first replication site, and at least one second master device **106** and a second database **108** at a second replication site. The first master device **102** having the first database **104** at a first replication site, is configured to receive at least one query, allocate at least a row to insert at least one record present in the query received, the row is allocated on basis of a row_id, determine if the record to insert exceeds the row allocated. roll back, if exceeds, the insert; otherwise transmit, during commit, the row_id and the record present in the query received to second master device for conflict check. The second master device **106** having the second database **108** at a second replication site, is configured to receive the row_id and the record present in the query, check a conflict based on the row_id received with at least a row in the second database. If the conflict is detected, the commit fails and an error is displayed, or if the conflict is not detected, the record is applied at the first database and the second database simultaneously.

In one implementation, a system **100** for multi-master replication is disclosed. The system **100** comprises at least one first master device **102** having a first database **104** at a first replication site, and configured to receive at least one query, allocate at least a row to insert at least one record present in the query received, the row is allocated on basis of a row_id, determine if the record to insert exceeds the row allocated, roll back, if exceeds, the insert; or transmit, to commit, the row_id and the record present in the query received to at least one second master device and a second database at a second replication site for conflict check.

In one implementation, a system **100** for multi-master replication is disclosed. The system **100** comprises at least one second master device **106** having a second database **108** at a second replication site, and configured to receive at least a row_id of a row and a record present in the query from at least one first master device, check a conflict based on the row _id received with at least a row in the second database, wherein if the conflict is detected, the commit fails and an error is displayed, or if the conflict is not detected, the record is applied at a first database residing at the first master device and the second database simultaneously.

In one implementation, whenever logs for a row_id are received, that row_id is marked as dirty, and update for the next record is started. This update may be an atomic operation and does not need any locks.

In one implementation, during an update operation on the node, row_id of the specific record is marked as dirty. If the row_id is marked dirty already due to the replica update, the current update operation fails at this stage. If the update of the record, in the current node succeeds, conflict resolution is moved to the commit time.

In one implementation, upon updating the next record in the row, moving at least a conflict resolution to commit.

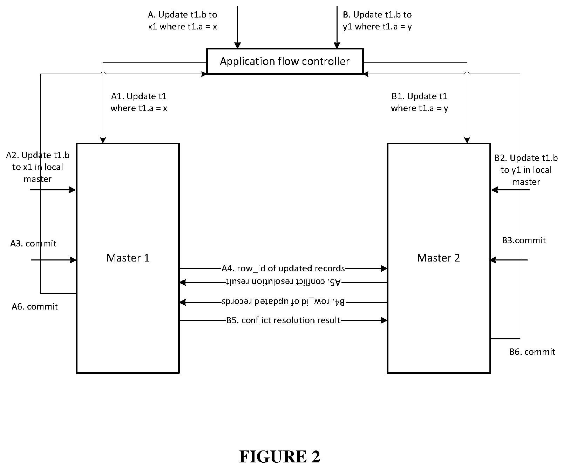

Referring now to figure **2****,** a block diagram for database replication is illustrated, in accordance with an embodiment of the present subject matter. Consider two update queries (A, B) at application. An application flow controller, upon receipt of these queries, may realize that the queries are updating distinct ranges, even though they update the same table t**1**, and sends query A to Master**1** and query B to Master**2**. The Master**1** upon receiving query (A**1**), creates an empty write set, updates the table locally (A**2**), populates the write set and tries to commit (A**3**). During commit, it sends write set containing row_ids of the updated records to other masters (Master**2** in this case). The Master**2** upon the receipt of message from Master**1**, checks if there is any conflict for the records in a local storage on Master**2**, and sends the conflict resolution result to the originator node (Master**1**) as A**5**, If there is no conflict, the row is committed in Master**2** before sending A**5**. Based on the results of conflict check, Master**1** goes ahead and commits the records (A**6**). Similar operations are done for other update (B) with Master**2** being the originator node and Master**1** as the replica.

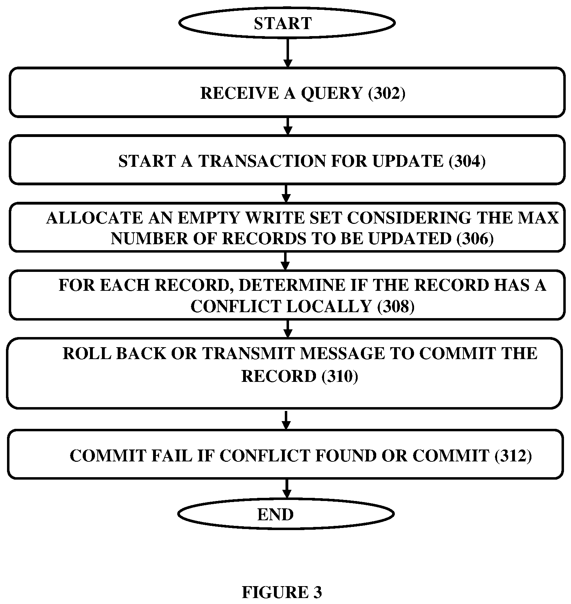

Figure **3** illustrates a method for multi-master replication, in accordance with an embodiment of the present subject matter. The method may be described in the general context of computer executable instructions. Generally, computer executable instructions can include routines, programs, objects, components, data structures, procedures, modules, functions, etc., that perform particular functions or implement particular abstract data types. The method may also be practiced in a distributed computing environment where functions are performed by remote processing devices that are linked through a communications network. In a distributed computing environment, computer executable instructions may be located in both local and remote computer storage media, including memory storage devices.

The order in which the method is described is not intended to be construed as a limitation, and any number of the described method blocks can be combined in any order to implement the method or alternate methods. Additionally, individual blocks may be deleted from the method without departing from the protection scope of the subject matter described herein. Furthermore, the method can be implemented in any suitable hardware, software, firmware, or combination thereof. However, for ease of explanation, in the embodiments described below, the method may be considered to be implemented in the above described system **100.**

In one implementation, method for multi-master replication is disclosed.

At block **302,** the present invention receives at least one query instructing the insertion/update of a record in a particular row of the database.

At block **304,** the present invention initiates/starts a transaction for the query received.

At block **306,** an empty write set considering a maximum number of records to be updated is allocated for the transaction.

At block **308,** the present invention determines if the record to be updated has a conflict.

In one implementation, whenever a row has to be updated, that row_id is marked as dirty, and update for the next record is started. This update may be atomic operation and may not need any locks.

In one implementation, during an update operation on the node, row_id of the specific record is marked as dirty. This again can be atomic operation. If the row_id is marked dirty already due to the replica update, the current update operation fails at this stage. If the update of the record, in the current node succeeds, conflict resolution is moved to the commit time.

At block **310,** the transaction is rolled back or information is transmitted to other replicas based on results in **308.**

At block **312,** if the conflict detected from other replicas, the commit fails and an error is displayed, or if the conflict is not detected, the records are committed.

In one implementation, the method is a row (row_id) based multi-master replication.

Apart from what is explained above, the present invention also include the below mentioned advantages:
✔ The present invention increases scalability and throughput of the system because of optimistic concurrency based replication.
✔ The present invention provides a row id based multi master replication.

A person skilled in the art may understand that any known or new algorithms by be used for the implementation of the present invention. However, it is to be noted that, the present invention provides a method to be used during back up operation to achieve the above mentioned benefits and technical advancement irrespective of using any known or new algorithms.

A person of ordinary skill in the art may be aware that in combination with the examples described in the embodiments disclosed in this specification, units and algorithm steps may be implemented by electronic hardware, or a combination of computer software and electronic hardware. Whether the functions are performed by hardware or software depends on the particular applications and design constraint conditions of the technical solution. A person skilled in the art may use different methods to implement the described functions for each particular application, but it should not be considered that the implementation goes beyond the scope of the present invention.

It may be clearly understood by a person skilled in the art that for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

When the functions are implemented in a form of a software functional unit and sold or used as an independent product, the functions may be stored in a computer-readable storage medium. Based on such an understanding, the technical solutions of the present invention essentially, or the part contributing to the prior art, or a part of the technical solutions may be implemented in a form of a software product. The computer software product is stored in a storage medium, and includes several instructions for instructing a computer device (which may be a personal computer, a server, or a network device) to perform all or a part of the steps of the methods described in the embodiment of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A system (100) for multi-master replication, the system comprising:
at least one first master device (102) and a first database (104) at a first replication site; and
at least one second master device (106) and a second database (108) at a second replication site;
wherein the first master device (102) having the first database (104) at a first replication site, is configured to:
receive at least one query;
allocate at least a row to insert at least one record present in the query received, the row is allocated on basis of a row_id, wherein the row_id is an identifier of a database table row;
determine if the record to insert exceeds the row allocated;
roll back, if exceeds, the insert; otherwise
transmit, during commit , the row_id and the record present in the query received to the second master device (106) for conflict check; and
wherein the second master device (106) having the second database (108) at the second replication site, is configured to:
receive the row_id and the record present in the query from the first master device (102);
check, a conflict based on the row_id received with at least a row in the second database (108); and
if there is no conflict, the record is committed at the second master device (108) and then the conflict check result is sent to the first master device (102);
wherein if the conflict is detected by the second master device (106), the commit fails and an error is displayed; and
if the conflict is not detected by the second master device (106), the record is committed at the first master device (106),
wherein the second master device (106) is configured to:
whenever a log for replication comprising a row_id of the record with updated data is received, mark the row_id of the row dirty; and
starting update for the record corresponding to the row_id, wherein the update is atomic operation and does not need any locks; wherein
during the update operation, if the row_id is marked dirty already due to the replica update, the current update operation fails at this stage; and
if the update of the record, in the current node succeeds, conflict resolution is moved to the commit time.

## Patentansprüche

1. System (100) für Multimaster-Replikation, wobei das System Folgendes umfasst:
mindestens eine erste Master-Vorrichtung (102) und eine erste Datenbank (104) an einem ersten Replikationsstandort; und
mindestens eine zweite Master-Vorrichtung (106) und eine zweite Datenbank (108) an einem zweiten Replikationsstandort; und
wobei die erste Master-Vorrichtung (102), die die erste Datenbank (104) an einem ersten Replikationsstandort aufweist, zu Folgendem konfiguriert ist:
Empfangen mindestens einer Abfrage;
Zuweisen mindestens einer Zeile, um mindestens einen Datensatz einzufügen, der in der empfangenen Abfrage vorhanden ist, wobei die Zeile auf der Basis einer row_id zugewiesen wird, wobei die row_id eine Kennung einer Datenbank-Tabellenzeile ist;
Bestimmen, ob der einzufügende Datensatz die zugewiesene Zeile überschreitet;
bei Überschreitung Rückgängigmachen der Einfügung; andernfalls Übertragen der row_id und des Datensatzes, der in der empfangenen Abfrage vorhanden ist, während der Festschreibung zur Konfliktprüfung an die zweite Master-Vorrichtung (106); und
wobei die zweite Master-Vorrichtung (106), die die zweite Datenbank (108) an dem zweiten Replikationsstandort aufweist, zu Folgendem konfiguriert ist:
Empfangen der row_id und des in der Abfrage vorhandenen Datensatzes von der ersten Master-Vorrichtung (102);
Prüfen, ob ein Konflikt basierend auf der empfangenen row_id mit mindestens einer Zeile in der zweiten Datenbank (108) vorliegt; und
falls kein Konflikt vorliegt, wird der Datensatz an der zweiten Master-Vorrichtung (108) festgeschrieben und dann wird das Ergebnis der Konfliktprüfung an die erste Master-Vorrichtung (102) gesendet;
wobei, falls der Konflikt von der zweiten Master-Vorrichtung (106) erkannt wird, die Festschreibung fehlschlägt und ein Fehler angezeigt wird;
falls der Konflikt von der zweiten Master-Vorrichtung (106) nicht erkannt wird, wird der Datensatz an der ersten Master-Vorrichtung (106) festgeschrieben,
wobei die zweite Master-Vorrichtung (106) zu Folgendem konfiguriert ist:
wann immer ein Protokoll zur Replikation mit einer row_id des Datensatzes mit aktualisierten Daten empfangen wird, Markieren der row_id der Zeile als geändert, und Starten der Aktualisierung des Datensatzes, der der row_id entspricht, wobei die Aktualisierung eine atomare Operation ist und keine Sperren benötigt; wobei,
falls die row_id während der Aktualisierungsoperation aufgrund der Replikat-Aktualisierung bereits als geändert markiert ist, die aktuelle Aktualisierungsoperation in diesem Stadium fehlschlägt; und
falls die Aktualisierung des Datensatzes im aktuellen Knoten erfolgreich ist, die Konfliktlösung auf den Festschreibungszeitpunkt verschoben wird.

## Revendications

1. Système (100) pour reproduction multi-maître, le système comprenant :
au moins un premier dispositif maître (102) et une première base de données (104) au niveau d'un premier site de reproduction ; et
au moins un second dispositif maître (106) et une seconde base de données (108) au niveau d'un second site de reproduction ;
dans lequel le premier dispositif maître (102), ayant la première base de données (104) au niveau d'un premier site de reproduction, est configuré pour :
recevoir au moins une interrogation ;
attribuer au moins une rangée pour insérer au moins un enregistrement présent dans l'interrogation reçue, la rangée étant attribuée sur la base d'un rangée_id, le rangée_id étant un identifiant d'une rangée de table de base de données ;
determiner si l'enregistrement à insérer dépasse la rangée attribuée ;
abaisser, en cas de dépassement, l'insertion ; autrement
transmettre, durant la validation, le rangée_id et l'enregistrement présent dans l'interrogation reçue au second dispositif maître (106) pour un contrôle de conflit ; et
dans lequel le second dispositif maître (106), ayant la seconde base de données (108) au niveau du second site de reproduction, est configuré pour :
recevoir le rangée_id et l'enregistrement présent dans l'interrogation en provenance du premier dispositif maître (102) ;
contrôler un conflit sur la base du rangée_id reçu avec au moins une rangée dans la seconde base de données (108) ; et
s'il n'y a aucun conflit, l'enregistrement est validé au niveau du second dispositif maître (108) et puis le résultat de contrôle de conflit est envoyé au premier dispositif maître (102) ;
dans lequel, si le conflit est détecté par le second dispositif maître (106), la validation échoue et une erreur est affichée ; et
si le conflit n'est pas détecté par le second dispositif maître (106), l'enregistrement est validé au niveau du premier dispositif maître (106),
dans lequel le second dispositif maître (106) est configuré pour :
à chaque fois qu'un journal pour reproduction comprenant une rangée_id de l'enregistrement avec des données mises à jour est reçu, marquer le rangée_id de la rangée comme étant sale ; et
commencer la mise à jour pour l'enregistrement correspondant au rangée_id, dans lequel la mise à jour est une opération atomique et ne nécessite aucun verrouillage ;
dans lequel
durant l'opération de mise à jour, si le rangée_id est déjà marqué comme étant sale en raison de la mise à jour de reproduction, l'opération de mise à jour actuelle échoue à ce stade ; et
si la mise à jour de l'enregistrement dans le nœud actuel est un succès, une résolution de conflit est transférée au temps de validation.
